(19) **Europäisches Patentamt**
**European Patent Office**
**Office européen des brevets**

(11) **EP 3 476 917 B1**

(12) **FASCICULE DE BREVET EUROPEEN**

(45) Date de publication et mention de la délivrance du brevet:
**19.08.2020 Bulletin 2020/34**

(21) Numéro de dépôt: **18200446.5**

(22) Date de dépôt: **15.10.2018**

(51) Int Cl.:
*C10G 2/00* (2006.01)　　*C10G 45/64* (2006.01)
*C10G 45/62* (2006.01)　　*C10G 47/18* (2006.01)
*C10G 3/00* (2006.01)　　　*B01J 37/18* (2006.01)
*C10L 1/08* (2006.01)　　　*C10G 65/12* (2006.01)
*B01J 21/12* (2006.01)　　　*B01J 23/42* (2006.01)
*B01J 23/883* (2006.01)　　*C10G 45/38* (2006.01)
*C10G 45/52* (2006.01)　　　*C10G 45/54* (2006.01)

(54) **PROCEDE DE DEMARRAGE D'UN PROCEDE DE PRODUCTION DE KEROSENE ET DE GAZOLE A PARTIR DE COMPOSES HYDROCARBONES PRODUITS PAR SYNTHESE FISCHER-TROPSCH**

VERFAHREN ZUM STARTEN EINES PRODUKTIONSVERFAHRENS VON KEROSIN UND DIESELKRAFTSTOFF MITHILFE VON KOHLENWASSERSTOFFVERBINDUNGEN, DIE DURCH FISCHER-TROPSCH-SYNTHESE ERZEUGT WERDEN

STARTING METHOD OF A METHOD FOR PRODUCING KEROSENE AND DIESEL OIL FROM HYDROCARBON COMPOUNDS PRODUCED BY FISCHER-TROPSCH SYNTHESIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2017 FR 1760011**

(43) Date de publication de la demande:
**01.05.2019 Bulletin 2019/18**

(73) Titulaire: **IFP Energies nouvelles**
**92852 Rueil-Malmaison Cedex (FR)**

(72) Inventeurs:
• **DULOT, HUGUES**
**92500 Rueil-Malmaison (FR)**

• **GREZAUD, Aline**
**92852 Rueil-Malmaison Cedex (FR)**
• **HERAUD, Jean-Philippe**
**69780 Saint Pierre de Chandieu (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 3 045 654　　US-A1- 2004 072 676**
**US-A1- 2011 207 978**

**Description**

## DOMAINE DE L'INVENTION

La présente invention concerne un procédé de démarrage d'un procédé de production de kérosène et de gazole à partir de composés hydrocarbonés produits par synthèse Fischer-Tropsch.

L'objet de l'invention concerne plus particulièrement le mode de démarrage de l'étape d'hydrotraitement des effluents hydrocarbonés produits par la synthèse Fischer-Tropsch.

Les procédés de synthèse Fischer-Tropsch permettent d'obtenir une large gamme de produits hydrocarbonés à partir du mélange de monoxyde de carbone (CO) et de dihydrogène (H2), communément appelé gaz de synthèse. L'équation globale de la synthèse Fischer-Tropsch peut s'écrire de la manière suivante :

$$n\ CO + (2n+1)\ H_2 \rightarrow C_nH_{2n+2} + nH_2O$$

La synthèse Fischer-Tropsch est au cœur des procédés de conversion du gaz naturel, du charbon ou de la biomasse en carburants ou en intermédiaires pour l'industrie chimique. Ces procédés sont appelés GTL (« Gas to Liquids » selon la terminologie anglo-saxonne) dans le cas de l'utilisation de gaz naturel comme charge initiale, CTL (« Coal to Liquids » selon la terminologie anglo-saxonne) pour le charbon, et BTL (« Biomass to Liquids » selon la terminologie anglo-saxonne) pour la biomasse.

Dans chacun de ces cas, la charge initiale est tout d'abord transformée en un gaz de synthèse qui comprend un mélange de monoxyde de carbone et de dihydrogène.

Le gaz de synthèse ayant un ratio $H_2$/CO proche de 2 est ensuite transformé majoritairement en paraffines grâce à la synthèse Fischer-Tropsch, et ces paraffines peuvent ensuite être transformées en carburants par un procédé d'hydrotraitement et éventuellement d'hydroisomérisation et d'hydrocraquage. Par exemple, des procédés de transformation tels que l'hydrocraquage, le déparaffinage, et l'hydroisomérisation des coupes lourdes (C22+) permettent de produire différents types de carburants dans la gamme des distillats moyens : gazole (coupe 180-370°C) et kérosène (coupe 140-300°C). La fraction naphta (coupe 30-140°C) est généralement envoyée à une unité de vapocraquage pour produire des oléfines légères utiles à la production des plastiques, mais peut également être soumise à un reformage catalytique afin d'augmenter l'indice d'octane pour une utilisation dans le pool essence et/ou elle peut encore être soumise à une aromatisation afin de produire des composés aromatiques valorisables comme sources pour la pétrochimie.

## ART ANTERIEUR

La production de carburants de synthèse via la synthèse Fischer-Tropsch à partir d'une charge d'hydrocarbures d'origine fossile et/ou de biomasse est une alternative aux carburants issus de pétrole pour répondre à une demande croissante de ces produits.

Les étapes d'hydrotraitement, d'hydrocraquage et d'hydroisomérisation des effluents hydrocarbonés produits par l'unité Fischer-Tropsch mettent en œuvre des catalyseurs à base de métaux du groupe VIB et/ou VIIIB tels que le nickel, le molybdène, le tungstène, le cobalt, le ruthénium. Les métaux nobles tels que le palladium et le platine sont particulièrement sensibles aux empoisonnements qui en réduisent les performances catalytiques. Les poisons les plus connus pour ces catalyseurs sont le soufre, l'azote ou encore les composés métaux carbonyles, par exemple le nickel carbonyle ou le fer carbonyle. Ces polluants sont apportés généralement par la charge. Dans le cas de notre invention, la charge étant produite par la synthèse Fischer-Tropsch elle ne comporte pas de soufre et d'azote. En effet le catalyseur Fischer-Tropsch est lui-même très sensible à ces poisons et une étape de purification du gaz de synthèse en amont permet d'éliminer les poisons tels que le soufre et l'azote.

Cependant des composés de type métaux carbonyles peuvent apparaître lors de l'étape d'hydrotraitement et donc dégrader les performances catalytiques compte tenu de la formulation du catalyseur pouvant être utilisé pour l'hydrotraitement, l'hydrocraquage et l'hydroisomérisation de la charge combinée aux spécificités de la charge traitée. En effet dans certaines conditions d'opération et particulièrement pendant la phase de démarrage, la présence de composés oxygénés, notamment les acides carboxyliques, et une température opératoire inférieure à 150 °C entrainement la formation de métaux carbonyles.

Par ailleurs, le démarrage de l'unité d'hydrotraitement nécessite un contrôle de la température dans les réacteurs compte tenu de la forte exothermicité de la réaction d'hydrogénation des oléfines en paraffines dans les réacteurs d'hydrotraitement afin d'éviter une surchauffe qui entraînerai des dégradations des catalyseurs et une baisse des performances.

Le brevet EP2351819 décrit le démarrage d'une unité d'hydrotraitement de la coupe naphta produit par synthèse Fischer-Tropsch. Ce brevet décrit l'utilisation d'un solvant inactif au démarrage pour être mélangé avec le naphta produit par la synthèse Fischer-Tropsch de façon à contrôler la chaleur de réaction dégagée par l'hydrogénation des oléfines. Cependant, le procédé décrit par le brevet EP2351819 prévoit que toute la charge naphta issue de l'unité de synthèse Fischer-Tropsch soit envoyée à l'unité d'hydrotraitement pendant le démarrage ce qui peut, compte tenu des températures opérées, générer la formation de métaux carbonyles et risque donc d'empoisonner le catalyseur. US 2004/0072676 divulgue un procédé d'hydrodewaxing d'une charge FT.

La présente invention propose d'effectuer d'opérer la phase de démarrage de l'étape d'hydrotraitement avec une séquence d'injection contrôlée de la charge et de montée en température progressive et différente du fonctionnement en phase de production des étapes d'hydrotraitement. La phase de production qui est optimisée pour produire les produits voulus, peut également être nommée en régime nominal ou en régime permanent. Les conditions opératoires en phase de démarrage selon l'invention sont choisies pour limiter voir éviter la formation de composés de type métaux carbonyles, tout en maitrisant la montée en température du catalyseur d'hydrotraitement pendant la phase de démarrage.

## DESCRIPTION SOMMAIRE DE L'INVENTION

La présente invention concerne un procédé de démarrage d'un procédé de production de kérosène et de gazole à partir de composés hydrocarbonés produits par synthèse Fischer-Tropsch, tel que défini dans les revendications.

On peut effectuer l'étape b) à une température comprise entre 300°C et 500°C, puis on peut refroidir le catalyseur d'hydrotraitement à une température comprise entre 120°C et 170°C, puis on peut effectuer l'étape c).

Selon l'invention, au début de l'étape d) la fraction hydrocarbonée lourde peut être à une température comprise entre 100°C et 250°C et à l'étape d), on peut chauffer progressivement pendant une durée comprise entre 1 et 20 heures, la fraction hydrocarbonée lourde jusqu'à une température comprise entre 260°C et 360°C.

Selon l'invention, à l'étape e), on peut mélanger progressivement la fraction légère avec la fraction lourde, la part de fraction légère introduite dans le mélange étant augmentée de 0% à 100% volumique de la fraction légère issue de l'étape a), sur une durée comprise entre 1 et 20 heures.

Pendant l'étape c), la fraction hydrocarbonée légère peut être évacuée du procédé de démarrage. En d'autre terme, pendant l'étape c), la fraction hydrocarbonée légère n'est utilisée pour être mise en contact avec le catalyseur d'hydrotraitement.

Le catalyseur d'hydrotraitement comporte du molybdène et du nickel, et un support comportant de l'alumine.

Le catalyseur d'hydrocraquage et d'hydroisomérisation comporte du platine et un support choisi parmi la silice-alumine et une zéolithe.

Selon l'invention, l'étape a) peut être opérée, en présence d'un catalyseur comprenant un support et un métal choisi parmi le cobalt et le fer, à une pression totale comprise entre 0,1 et 15 MPa, à une température comprise entre 150 et 350°C, et à une vitesse volumique horaire comprise entre 100 et 20000 volumes de gaz de synthèse par volume de catalyseur et par heure.

On effectue la mise en contact avec le catalyseur d'hydrotraitement à l'étape f) dans les conditions opératoires suivantes :

- une température comprise entre 100 et 450°C,
- une pression totale comprise entre 0,5 de 15 MPa,
- un débit d'hydrogène tel que le rapport volumique d'hydrogène par rapport à la charge d'hydrocarbures -c'est-à-dire le mélange des fractions hydrocarbonées lourdes et légères- soit compris entre 100 à 3000 Nl/l/h,
- une vitesse volumique horaire comprise entre 0,1 et 10h$^{-1}$.

Selon l'invention, à l'étape f), on continue de mettre en contact le mélange comportant la fraction hydrocarbonée lourde et la fraction hydrocarbonée légère avec le catalyseur d'hydrotraitement puis avec le catalyseur d'hydrocraquage et d'hydroisomérisation, la mise en contact avec le catalyseur d'hydrocraquage et d'hydroisomérisation étant effectuée dans les conditions opératoires suivantes :

- une température comprise entre 200 et 450°C,
- une pression totale comprise entre 0,2 et 15 MPa,
- un débit d'hydrogène tel que le rapport volumique d'hydrogène par rapport à la charge d'hydrocarbures -c'est-à-dire le mélange des fractions hydrocarbonées lourdes et légères- soit compris entre 100 à 2000 Nl/l/h,
- une vitesse volumique horaire est comprise entre 0,1 et 10h$^{-1}$.

## DESCRIPTION DETAILLEE DE L'INVENTION

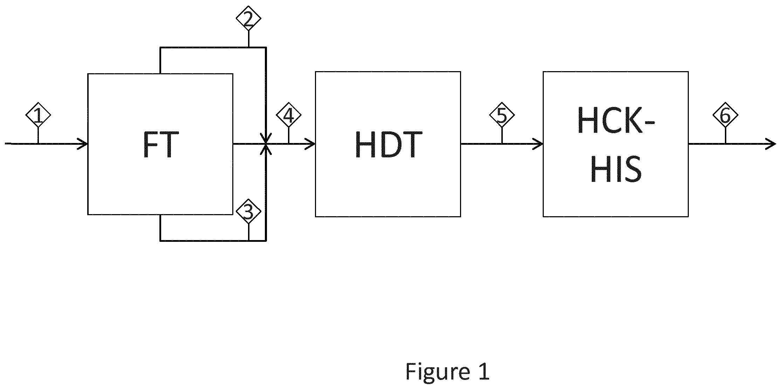

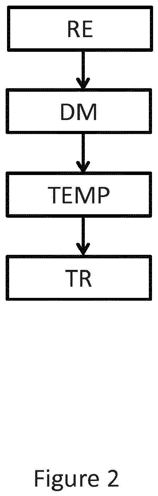

Le procédé de production de kérosène et de gazole est illustré par la figure 1. Le procédé de démarrage de la production de kérosène et de gazole est illustré par la figure 2.

En référence à la figure 1, le procédé de production de kérosène et de gazole met en œuvre au moins une étape de synthèse Fischer-Tropsch FT, une étape d'hydrotraitement HDT et une étape d'hydrocraquage et d'hydroisomérisation HCK-HIS. Les conditions opératoires de la phase de production sont décrites ci-après en référence à la figure 1.

Le procédé de démarrage du procédé de production de kérosène et de gazole à partir de composés hydrocarbonés produits par synthèse Fischer-Tropsch, selon la présente invention, est décrit ultérieurement en détail en référence à la figure 2.

**Étape de réaction catalvtiaue de synthèse Fischer-Tropsch FT**

L'étape de synthèse Fischer-Tropsch FT permet de produire des hydrocarbures de synthèse à partir d'une charge gazeuse composée majoritairement d'hydrogène et de monoxyde de carbone, appelée également gaz de synthèse arrivant par le conduit 1.

Le gaz de synthèse arrivant par le conduit 1 peut être produit à partir d'une charge d'hydrocarbures d'origine fossile et/ou de biomasse. La charge peut être une charge gazeuse, solide, liquide ou leur mélange.

On entend par charge d'hydrocarbures d'origine fossile une charge contenant du gaz naturel, du charbon, du coke de pétrole (petcoke selon la terminologie anglo-saxonne), des résidus pétroliers, des pétroles bruts, des pétroles bruts étêtés, des huiles désasphaltées, des asphaltes de désasphaltage, des dérivés de procédés de conversion du pétrole (comme par exemple les fractions lourdes d'un procédé de craquage catalytique en lit fluidisé (FCC pour Fluid Catalytic Cracking selon la terminologie anglo-saxonne), les fractions lourdes d'un procédé decoking, des résidus de viscoréduction ou procédé thermique similaires), des sables bitumineux ou leurs dérivés, des gaz de schistes et des schistes bitumineux ou leurs dérivés, seuls ou en mélange.

On entend par biomasse tout type de biomasse, solide ou liquide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation. On entend également par biomasse de la biomasse liquide (comme par exemple : l'huile de colza, l'huile de palme, l'huile de pyrolyse, ...), de la biomasse en slurry selon la terminologie anglo-saxonne correspondant à un mélange de biomasse liquide avec une charge hydrocarbonée solide. Dans le cas d'une charge comprenant de la biomasse, celle-ci peut être soumise à un prétraitement comprenant des étapes de séchage, de torréfaction, de granulation et de broyage.

De préférence, la charge est choisie parmi du gaz naturel, du charbon, du coke de pétrole et/ou de la biomasse.

Le gaz de synthèse arrivant par le conduit 1 est introduit dans l'étape Fischer-Tropsch FT de réaction catalytique de synthèse Fischer Tropsch.

De manière avantageuse, le gaz de synthèse arrivant par le conduit 1 comporte du monoxyde de carbone et de l'hydrogène avec un rapport molaire $H_2/CO$ compris entre 1 et 3, de manière préférée entre 1,5 et 2,5. Par ailleurs, le gaz de synthèse peut présenter une teneur en soufre inférieure à 100 ppb volume, de préférence inférieure à 50 ppb volume, de manière plus préférée inférieure à 10 ppb volume ; une teneur en HCN inférieure 100 ppb volume, de préférence inférieure à 50 ppb volume, de manière plus préférée inférieure à 10 ppb volume et une teneur en $NH_3$ inférieure 100 ppm volume, de préférence inférieure à 10 ppm volume, de manière plus préférée inférieure à 1 ppm volume. Le document FR 3045654 décrit des étapes pour produire un gaz de synthèse.

Selon l'invention, on effectue une réaction catalytique de synthèse de synthèse Fischer-Tropsch, lors de l'étape Fischer-Tropsch FT, avec un gaz de synthèse, arrivant par le conduit 1, pour produire une fraction hydrocarbonée lourde, évacuée par le conduit 3 et une fraction hydrocarbonée légère, évacuée par le conduit 2. En général, la fraction légère appelée également condensats correspond aux hydrocarbures à l'état gazeux dans les conditions de la réaction Fischer-Tropsch et la fraction lourde appelée cires correspond aux hydrocarbures à l'état liquide dans les conditions de la réaction Fischer-Tropsch. Les conditions de la réaction Fischer-Tropsch sont détaillées ci-après.

L'étape de synthèse Fischer-Tropsch FT est opérée sous une pression totale comprise entre 0,1 et 15 MPa, de préférence entre 0,5 et 10 MPa, sous une température comprise entre 150 et 350°C, de préférence entre 180 et 270°C. La vitesse volumique horaire est avantageusement comprise entre 100 et 20000 volumes de gaz de synthèse par volume de catalyseur et par heure (100 à 20000 h$^{-1}$) et de préférence entre 400 et 10000 volumes de gaz de synthèse par volume de catalyseur et par heure (400 à 10000 h$^{-1}$ )

L'étape de synthèse Fischer-Tropsch FT peut être mise en œuvre dans une unité réactionnelle comprenant un ou plusieurs réacteurs adaptés, dont la technologie est connue de l'homme de métier. Il peut s'agir, par exemple, de réacteurs à lit fixe multitubulaire, ou de réacteurs de type colonne à bulles, connus en anglais sous l'appellation de "slurry bubble column", ou de réacteurs microcanaux.

Selon un mode préféré de l'invention, l'étape Fischer-Tropsch FT met en œuvre un ou plusieurs réacteurs de type colonne à bulles. La synthèse étant fortement exothermique, ce mode de réalisation permet, entre autres, d'améliorer le contrôle thermique du réacteur et de créer peu de perte de charges.

Lors d'une utilisation dans un réacteur de type colonne à bulles, la taille des particules de catalyseur est généralement comprise entre 10 et 500 micromètres ($\mu$m), de manière préférée entre 10 et 300 $\mu$m et de manière très préférée entre 20 et 150 $\mu$m, et de manière encore plus préférée entre 20 et 120 $\mu$m.

Le catalyseur mis en œuvre dans cette étape de synthèse Fischer-Tropsch FT est généralement tout solide catalytique connu de l'homme du métier permettant de réaliser la synthèse Fischer-Tropsch. De préférence, le catalyseur mis en œuvre dans ladite étape est un catalyseur supporté et comporte une phase active comprenant du cobalt ou du fer. De manière très préférée, ladite phase active comprend du cobalt, de préférence, la phase active est constituée de cobalt.

La teneur en cobalt ou en fer est entre 1 et 60% poids par rapport au poids du catalyseur, de préférence de 5 à 30% poids, et de manière très préférée de 10 à 30% poids.

Le catalyseur peut avantageusement comprendre en outre au moins un dopant choisi parmi le bore, le phosphore, un métal noble des groupes VIIB ou VIIIB, un élément alcalin (élément du groupe IA) ou un élément alcalino-terreux (élément du groupe IIA).

Dans le cas où le dopant est choisi parmi un métal noble du groupe VIIIB, il est de préférence choisi parmi le platine (Pt), le palladium (Pd), le rhodium (Rh).

Dans le cas où le dopant est choisi parmi un élément alcalin ou un alcalino-terreux, il est de préférence choisi parmi le potassium (K), le sodium (Na), le magnésium (Mg) ou le calcium (Ca).

Le catalyseur mis en œuvre à l'étape Fischer-Tropsch FT est généralement un catalyseur supporté. Le support peut être, à titre d'exemple, à base d'alumine, de silice ou de titane. Il peut également contenir un spinelle. De manière préféré, il est à base d'une silice-alumine contenant éventuellement une phase spinelle.

L'étape de synthèse Fischer-Tropsch permet de produire au moins deux fractions : une fraction hydrocarbonée lourde, évacuée par le conduit 3 et une fraction hydrocarbonée légère, évacuée par le conduit 2.

La fraction lourde est en générale obtenue sous forme liquide dans les conditions opératoires (température et pression) de la réaction de synthèse Fischer-Tropsch. Les hydrocarbures de la fraction hydrocarbonée lourde peuvent avoir un point d'ébullition initial égal à une température comprise entre 120 et 300°C et de préférence entre 130 et 180°C et de manière encore plus préférée à une température d'environ 150°C, en d'autres termes le point de coupe initiale est situé entre 120 et 300°C.

La fraction légère est composée par au moins une partie des hydrocarbures obtenus sous forme gazeuse dans les conditions opératoires (température et pression) de la réaction de synthèse Fischer-Tropsch. Les hydrocarbures de la fraction hydrocarbonée légère peuvent avoir un point d'ébullition final égale à une température comprise entre 120 et 300°C et de préférence entre 130 et 180°C et de manière encore plus préférée à une température d'environ 150°C. Par exemple, les hydrocarbures de la fraction hydrocarbonée légère peuvent avoir un point d'ébullition final égal au point d'ébullition initial de la fraction hydrocarbonée lourde.

Plus précisément la fraction gazeuse issue de la synthèse Fischer-Tropsch est séparée en trois phases, la phase aqueuse produite au cours de la réaction Fischer-Tropsch, la phase gazeuse qui contient le gaz de synthèse non converti ainsi que des hydrocarbures les plus légers (C4-) formés au cours de la synthèse Fischer-Tropsch et la phase hydrocarbonée liquide qui contient les hydrocarbures C5+. Cette phase hydrocarbonée liquide contenant les C5+ correspond à la fraction hydrocarbonée légère. Cette séparation peut être réalisée par des méthodes bien connues de l'homme du métier notamment par une étape de refroidissement suivie d'une séparation par flash et/ou décantation.

Les hydrocarbures de synthèse produits par l'étape de synthèse Fischer-Tropsch FT sont majoritairement composés de paraffines mais contiennent également des oléfines et des oxygénés. Dans la fraction hydrocarbonée légère, la teneur en paraffines est supérieure à 70 %pds par rapport à la masse totale de la fraction légère, la teneur en oléfines inférieures à 20 %pds et la teneur composés oxygénés inférieure à 10 %pds. Dans la fraction hydrocarbonée lourde, la teneur en paraffines est supérieure à 80 %pds par rapport à la masse totale de la fraction lourde, la teneur en oléfines inférieures à 15 %pds et la teneur composés oxygénés inférieure à 5 %pds.

Ces hydrocarbures de synthèse ne sont pas directement incorporables aux « pools » carburants conventionnels ou utilisable comme lubrifiants. A titre d'exemple, la fraction hydrocarbonée lourde comporte des C20+. Or le point d'écoulement d'une paraffine à 20 atomes de carbone ayant un point d'ébullition à 340 °C est de 37°C environ ce qui rend son incorporation directe dans la coupe gazole impossible compte tenu de la spécification requises de - 15°C. Des étapes de traitement sont nécessaires afin de convertir les composés oléfiniques et oxygénés en composés paraffines, de convertir les composés les plus lourds (C22+) en composés plus légers et d'augmenter ainsi le rendement en distillats moyens, et d'améliorer les propriétés des coupes kérosène et gazole afin de respecter les spécifications requises pour les carburants.

Le procédé selon l'invention propose, lorsque le procédé fonctionne en phase de production, c'est-à-dire en régime nominal après la phase de démarrage, de traiter simultanément la fraction hydrocarbonée lourde et la fraction hydrocarbonée légère issues de l'unité Fischer-Tropsch, en présence d'hydrogène dans une étape d'hydrotraitement suivie, éventuellement, d'une étape d'hydrocraquage et d'hydroisomérisation.

La fraction hydrocarbonée légère et la fraction hydrocarbonée lourde sont rassemblées et envoyées par le conduit 4 dans l'étape d'hydrotraitement HDT.

## Étape d'hydrotraitement

Selon l'invention, on effectue une étape d'hydrotraitement HDT des fractions hydrocarbonées lourdes et légères issues de l'étape de synthèse Fischer-Tropsch.

Cette étape d'hydrotraitement a pour objectif de réduire la teneur en composés oléfiniques et insaturés ainsi que d'hydrotraiter les composés oxygénés (qui sont majoritairement des composés alcools) présents dans les hydrocarbures liquides des fractions lourdes et légères.

Dans l'étape d'hydrotraitement HDT, les hydrocarbures liquides des fractions lourdes et légères issus de l'étape de synthèse Fischer-Tropsch sont mis en contact en présence d'hydrogène et d'un catalyseur d'hydrotraitement à des températures et des pressions opératoires permettant de réaliser l'hydrodéoxygénation (HDO) des composés oxygénés et l'hydrogénation des oléfines présents dans la charge. En général, l'étape d'hydrotraitement est réalisée dans un réacteur en lit fixe.

Les conditions opératoires de la mise en contact avec le catalyseur d'hydrotraitement sont les suivantes. Les températures réactionnelles utilisées dans le réacteur d'hydrotraitement sont comprises entre 100 et 450°C, de préférence entre 150 et 430°C, voire de préférence entre 150 et 380°C. La gamme de pression totale utilisée varie entre 0,5 de 15 MPa (5 à 150 bars), de préférence entre 1 et 10 MPa (10 et 100 bars), et de manière encore plus préférée entre 1 et 9 MPa (10 et 90 bars). L'hydrogène qui alimente le réacteur d'hydrotraitement est introduit à un débit tel que le rapport volumique d'hydrogène par rapport aux hydrocarbures soit compris entre 100 à 3000Nl/l/h (Normaux litre d'hydrogène par litre de charge d'hydrocarbures et par heure), de préférence entre 100 et 2000Nl/l/h et de façon encore plus préférée entre 250 et 1500Nl/l/h. Le débit de la charge est tel que la vitesse volumique horaire (définie comme étant le rapport du débit de charge d'hydrocarbures -c'est-à-dire le mélange des fractions hydrocarbonées légère et lourde- à température et pression ambiante sur le volume de catalyseur) est comprise entre 0,1 et 10h$^{-1}$, de préférence entre 0,2 et 5h$^{-1}$ et de manière encore plus préférée entre 0,2 et 3h$^{-1}$. Dans ces conditions, la teneur en molécules insaturées et oxygénées est réduite de préférence à moins de 0,5 %pds dans l'effluent issu de l'étape HDT, voire à moins de 0,1 %pds.

L'étape d'hydrotraitement est de préférence non convertissante, c'est-à-dire que l'on peut choisir les conditions opératoires de manière à ce que la conversion de la fraction hydrocarbonée ayant un point d'ébullition supérieur à 370 °C en une fraction hydrocarbonée ayant un point d'ébullition inférieur à 370 °C soit inférieure à 20 %pds, de préférence inférieure à 10 %pds et de manière très préférée inférieure à 5 %pds.

Pour réaliser l'étape d'hydrotraitement HDT on choisit des catalyseurs supportés d'hydrotraitement non craquants ou peu craquants. On utilise un catalyseur comportant du nickel et du molybdène et comportant au moins un support.

Le support consiste en une alumine, de préférence de l'alumine éta ou de l'alumine gamma.

Ces catalyseurs peuvent être préparés par toutes les méthodes connues de l'homme de l'art ou bien peuvent être acquis auprès de sociétés spécialisées dans la fabrication et la vente de catalyseurs.

La concentration en métal du groupe VIIIB non noble, exprimée en poids d'oxyde de métaux par rapport au poids total du catalyseur, lorsque celui-ci est utilisé, est comprise entre 0,01 et 15 %. La concentration totale en métaux des groupes VIB et VIIIB, lorsque ceux-ci sont utilisés, exprimée en poids d'oxyde de métaux par rapport au poids total du catalyseur, est comprise entre 5 et 40 %, et de préférence entre 7 et 30 %. Le rapport pondéral exprimée en oxyde de métal (ou de métaux) du groupe VIB sur métal (ou métaux) du groupe VIIIB est compris entre 1,25 et 20, et de préférence entre 2 et 10. Dans le cas de l'emploi de métaux nobles (platine et/ou palladium), la teneur en métal noble, exprimé en poids de métal par rapport au poids total du catalyseur, est comprise entre 0,05 et 3 %, et de préférence entre 0,1 et 2 %.

Le catalyseur d'hydrotraitement peut contenir avantageusement du phosphore. En effet, ce composé apporte deux avantages aux catalyseurs d'hydrotraitement : une facilité de préparation lors notamment de l'imprégnation des solutions de nickel et de molybdène, et une meilleure activité d'hydrogénation. Avantageusement, s'il y a du phosphore dans le catalyseur d'hydrotraitement, la concentration en oxyde de phosphore $P_2O_5$, exprimée en poids d'oxyde de phosphore $P_2O_5$ par rapport au poids du catalyseur, est inférieure à 15% en poids et de préférence inférieure à 10% en poids.

On peut utiliser également un catalyseur contenant du bore et du phosphore. Avantageusement le bore et le phosphore sont des éléments promoteurs déposés sur le support, comme mentionné dans le brevet EP-297,949. La somme des quantités de bore et de phosphore, exprimées respectivement en poids de trioxyde de bore et pentoxyde de phosphore, par rapport au poids de support, est d'environ 5 à 15 % et le rapport atomique bore sur phosphore est d'environ 1:1 à 2:1 et au moins 40 % du volume poreux total du catalyseur fini est contenu dans des pores de diamètre moyen supérieur à 13 nanomètres. De façon préférée, la quantité de métal du groupe VIB tel que le molybdène ou le tungstène, est telle que le rapport atomique phosphore sur métal du groupe VIB est d'environ 0,5:1 à 1,5:1; les quantités de métal du groupe VIB et de métal du groupe VIIIB, tel que le nickel ou le cobalt, sont telles que le rapport atomique du métal du groupe VIIIB sur métal du groupe VIB est d'environ 0,3:1 à 0,7:1. Les quantités de métal du groupe VIB exprimées en poids d'oxydes de métaux par rapport au poids de catalyseur fini est d'environ 2 à 30% et la quantité de métal du groupe VIIIB exprimée en poids d'oxydes de métapar rapport au poids de catalyseur fini est d'environ 0,01 à 15%.

Le catalyseur d'hydrotraitement peut avantageusement contenir du silicium promoteur déposé sur le support. Par exemple, on peut mettre en œuvre un catalyseur d'hydrotraitement comportant du BSi ou PSi.

Avantageusement, l'alumine composant le support est choisie parmi de l'alumine éta ou de l'alumine gamma.

L'étape d'hydrotraitement HDT permet de produire un effluent comportant une fraction gazeuse et une fraction liquide. L'intégralité de l'effluent, c'est à dire la fraction gazeuse, composée d'hydrogène en majorité et de composés oxygénés tels que le monoxyde de carbone, dioxyde de carbone et l'eau issus de la décomposition des composés oxygénés contenus dans la charge, et la fraction liquide, peut être directement envoyé vers l'étape d'hydrocraquage et d'hydroisomérisation par le conduit 5.

## Étape hydrocraquage et d'hydroisomérisation

On effectue une étape d'hydrocraquage et d'hydroisomérisation HCK-HIS de l'effluent arrivant par le conduit 5 de l'étape d'hydrotraitement HDT.

L'étape d'hydrocraquage et d'hydroisomérisation a pour objectif l'augmentation du rendement en distillats moyens, kérosène et gazole, par conversion sélective de la fraction ayant un point d'ébullition supérieur à 370 °C en fraction hydrocarbonée ayant un point d'ébullition compris entre 120 °C et 370 °C et l'amélioration des propriétés des distillats moyens produits par l'isomérisation de l'effluent entrant dans l'étape et fortement composés de normales paraffines. Pour ce faire, dans l'étape d'hydrocraquage et d'hydroisomérisation HCK-HIS, les hydrocarbures liquides de l'effluent arrivant par le conduit 5 sont mis en contact en présence d'hydrogène et d'un catalyseur d'hydrocraquage et d'hydroisomérisation à des températures et des pressions opératoires permettant de réaliser la conversion par passe en produits à points d'ébullition supérieurs ou égaux à 370°C en des produits ayant des points d'ébullition inférieurs à 370°C est supérieure à 80 % poids, et de façon encore plus préférée d'au moins 85 % poids, de préférence supérieure à 88 % poids, de manière à obtenir des distillats moyens (gazole et kérosène) ayant des propriétés à froid suffisamment bonnes (point d'écoulement, point de congélation) pour satisfaire aux spécifications en vigueur pour ce type de carburant. Le produit de l'étape d'hydrocraquage et d'hydroisomérisation est évacué de l'unité HCK-HIS par le conduit 6.

En général, l'étape d'hydrocraquage et d'hydroisomérisation est réalisée dans un réacteur, par exemple en lit fixe.

Les conditions opératoires de la mise en contact avec le catalyseur d'hydrocraquage et d'hydroisomérisation sont les suivantes. La température est comprise entre 200 et 450°C, et préférentiellement de 250°C à 450°C, avantageusement de 300 à 450°C, et encore plus avantageusement supérieure à 320°C ou par exemple entre 320 et 420°C. La pression est généralement comprise entre 0,2 et 15 MPa (2 et 150 bars), et de préférence entre 0,5 et 10 MPa (5 et 100 bars) et avantageusement entre 1 et 9 MPa (10 et 90 bars). La vitesse spatiale (définie comme étant le rapport du débit de charge d'hydrocarbures -c'est-à-dire l'effluent hydrocarbonée arrivant par le conduit 5- à température et pression ambiante sur le volume de catalyseur) est comprise entre 0,1 h$^{-1}$ et 10 h$^{-1}$ et de préférence entre 0,2 h$^{-1}$ et 7h$^{-1}$ et avantageusement entre 0,5 h$^{-1}$ et 5,0 h$^{-1}$. L'hydrogène qui alimente le réacteur d'hydrotraitement est introduit à un débit tel que le rapport volumique d'hydrogène par rapport aux hydrocarbures soit compris entre 100 et 2000 Normaux litres d'hydrogène par litre de charge et par heure, et préférentiellement entre 150 et 1500 litres d'hydrogène par litre de charge et par heure.

Les catalyseurs utilisés dans cette étape d'hydrocraquage et d'hydroisomérisation sont connus de l'homme du métier et un exemple est décrit dans le document US7404890. Ils sont généralement du type bifonctionnel associant une fonction acide à une fonction hydrogénante.

Le support est choisi parmi une silice alumine, ou un mélange d'alumine et de zéolithe, la zéolithe étant choisie parmi la zéolithe Y et la zéolithe IZM-2.

La teneur en métal noble, exprimée en % poids de métal noble par rapport au poids total dudit catalyseur, est avantageusement comprise entre 0,01 et 5%, de manière préférée entre 0,05 et 4% et de manière très préférée entre 0,10 et 2%.

La teneur en métal du groupe VIB dudit catalyseur, exprimée en poids d'oxyde de métal par rapport au poids total du catalyseur, est avantageusement comprise entre 5 et 40%, de manière préférée entre 10 et 35% et la teneur en métal du groupe VIIIB dudit catalyseur, exprimée en poids d'oxyde de métal par rapport au poids total du catalyseur, est avantageusement comprise entre 0,5 et 10%, de manière préférée entre 1 et 8% et de manière très préférée entre 1,5 et 6%.

Le métal est avantageusement introduit sur le catalyseur par toute méthode connue de l'homme du métier, comme par exemple le comalaxage, l'imprégnation à sec ou l'imprégnation par échange.

Éventuellement, un liant peut également être utilisé durant l'étape de mise en forme du support du catalyseur d'hydrocraquage et d'hydroisomérisation. On utilise de préférence un liant lorsque le catalyseur d'hydrocraquage et d'hydroisomérisation comporte un support composé de zéolithe. Ledit liant est avantageusement choisi parmi la silice

(SiO$_2$), l'alumine (Al$_2$O$_3$), les argiles, l'oxyde de titane (TiO$_2$), l'oxyde de bore (B$_2$O$_3$) et la zircone (ZrO$_2$) pris seul ou en mélange. De préférence, ledit liant est choisi parmi la silice et l'alumine et de manière encore plus préférée, ledit liant est l'alumine, sous toutes ses formes connues de l'homme du métier, telle que par exemple l'alumine gamma.

La teneur en silice de la silice-alumine, exprimée en poids de silice par rapport au poids du support du catalyseur d'hydrocraquage et d'hydroisomérisation, est généralement comprise entre 1 et 95%, avantageusement entre 5 et 95% et de manière préférée entre 10 et 80% et de manière encore plus préférée entre 20 et 70% et entre 22 et 45%.

Les deux étapes, d'hydrotraitement HDT et d'hydrocraquage et d'hydroisomérisation HCK-HIS, peuvent être réalisées sur les deux types de catalyseurs dans deux ou plusieurs réacteurs différents, ou/et dans un même réacteur.

## Étape de séparation

On peut effectuer une étape de séparation de l'effluent arrivant de l'étape d'hydroisomérisation et d'hydrocraquage HCK-ISO par le conduit 6 de manière à obtenir au moins une fraction gazeuse, au moins une fraction naphta, au moins une fraction distillat moyen et au moins une fraction résiduelle. (L'étape de séparation n'est pas représentée sur la figure 1).

L'effluent arrivant par le conduit 6 peut être envoyé dans un moyen de séparation, de préférence dans un train de distillation qui intègre une distillation atmosphérique et éventuellement une distillation sous vide, qui a pour but de séparer les produits de conversion de point d'ébullition inférieur à 340°C et de préférence inférieur à 370°C, de la fraction résiduelle dont le point initial d'ébullition est généralement supérieur à au moins 340°C et de préférence supérieur ou égal à au moins 370°C. Parmi les produits de conversion hydroisomérisés, il est séparé outre les gaz légers C1-C4 au moins une fraction naphta, et au moins une fraction distillat moyen kérosène et gazole. La fraction résiduelle dont le point initial d'ébullition est généralement supérieur à au moins 340°C et de préférence supérieur ou égal à au moins 370°C est de préférence recyclée dans l'étape d'hydrotraitement HDT et/ou l'étape d'hydrocraquage et d'hydroisomérisation HCK-ISO.

Il peut être également avantageux de recycler dans l'étape d'hydrotraitement HDT, et/ou l'étape d'hydrocraquage et d'hydroisomérisation HCK-ISO, une partie du kérosène et/ou du gazole ainsi obtenus. Il va sans dire que les coupes gazoles et kérosènes sont de préférence récupérées séparément, mais les points de coupe sont ajustés par l'exploitant en fonction de ses besoins. On a pu constater qu'il est avantageux de recycler une partie du kérosène pour améliorer ses propriétés à froid.

Selon l'invention, avant d'opérer en phase de production de l'étape d'hydrotraitement HDT et l'étape d'hydrocraquage et d'hydroisomérisation HCK-HIS, on effectue une phase de démarrage spécifique décrite ci-après. La phase de démarrage a pour objet de minimiser les risques de perte de performances catalytiques liée à la formation de composés de type métaux carbonyles, tout en maitrisant la montée en température des catalyseurs. La phase de démarrage concerne l'étape d'hydrotraitement et éventuellement l'étape d'hydrocraquage et d'hydroisomérisation si elle est mise en oeuvre. Bien évidemment, en amont de cette phase de démarrage, l'unité de synthèse Fischer-Tropsch a été démarrée et est donc opérationnelle pour fournir les fractions hydrocarbonées lourde et légère décrites ci-dessus.

Selon l'invention, la phase de démarrage de l'étape d'hydrotraitement et de l'étape d'hydrocraquage et d'hydroisomérisation, est réalisée en une succession d'étapes mentionnées ci-après. La figure 2 illustre la succession d'étapes. Cette succession d'étapes peut être limitée uniquement aux étapes ci-après décrites, mais il est également possible de raffiner la phase de démarrage en ajoutant une ou plusieurs étapes quelconques avant, ou après, ou entre les étapes décrites ci-après.

## Etape de réduction RE

On effectue une étape de réduction des catalyseurs mis en œuvre dans l'étape d'hydrotraitement HDT et éventuellement dans l'étape d'hydrocraquage et d'hydroisomérisation HCK-HIS. L'étape de réduction est réalisée en mettant en contact les catalyseurs avec un flux d'hydrogène à une température comprise entre 300 et 500°C, de préférence entre 400 et 490°C, par exemple à environ 450°C. Le flux d'hydrogène peut être composé d'hydrogène pur ou en mélange avec un gaz inerte tel l'azote. Le catalyseur peut être en lit fixe, par exemple disposé dans un réacteur utilisé à l'étape d'hydrotraitement HDT et/ou un réacteur utilisé à l'étape d'hydrocraquage et d'hydroisomérisation HCK-HIS et le flux d'hydrogène balaye le catalyseur en lit fixe. Le flux d'hydrogène peut être introduit dans le réacteur d'hydrotraitement, et éventuellement dans le réacteur d'hydrocraquage et d'hydroisomérisation, à des débits d'hydrogène pur compris entre 100 et 2000 normaux litres par heure et par litre de catalyseur, de préférence entre 300 et 1500 normaux litres par heure et par litre de catalyseur. La mise en contact du catalyseur avec le flux d'hydrogène peut être réalisée pendant une durée suffisante, par exemple entre 1 h et 50 h, de préférence entre 2 h et 10 h, voire entre 2 h et 5 h.

A la fin de l'étape de réduction, on refroidit le catalyseur d'hydrotraitement réduit, et éventuellement le catalyseur d'hydrocraquage et d'hydroisomérisation, à une température comprise entre 120°C et 170°C, de préférence entre 140°C et 160°C, par exemple à une température d'environ 150°C. Le refroidissement peut être effectué par balayage du catalyseur avec un gaz comportant de l'hydrogène pur, un mélange d'hydrogène et de gaz inerte, ou un gaz inerte par exemple de l'azote, à une température choisie pour refroidir le catalyseur, par exemple à une température comprise entre 120°C et 170°C, de préférence entre 140°C et 160°C, par exemple à une température d'environ 150°C.

**Etape de démarrage DM**

Après avoir effectué l'étape de réduction RE, on introduit la fraction hydrocarbonée lourde produite à l'étape de synthèse Fischer-Tropsch FT dans l'unité d'hydrotraitement HDT puis, éventuellement, dans l'unité d'hydrocraquage et d'hydroisomérisation HCK-HIS si elle est mise en œuvre, en présence d'hydrogène. Cependant en différence avec la phase de production, lors de l'étape de démarrage, on ne traite pas à l'étape d'hydrotraitement HDT et éventuellement pas à l'étape d'hydrocraquage et d'hydroisomérisation HCK-HIS, la fraction hydrocarbonée légère produite par l'étape FT. Plus précisément, on mélange la fraction lourde avec un flux d'hydrogène et on met en contact ce mélange avec le catalyseur d'hydrotraitement mis en œuvre à l'étape d'hydrotraitement HDT.

La température de la fraction lourde peut ne pas être modifiée en sortant de l'étape de synthèse Fischer-Tropsch FT, avant d'être introduite à l'étape d'hydrotraitement HDT. Typiquement, la température de la fraction lourde avant d'être introduite dans l'étape d'hydrotraitement HDT lors de l'étape de démarrage DM peut être comprise entre 100°C et 250°C, et de préférence entre 120°C et 200°C.

L'effluent issu de l'étape d'hydrotraitement HDT peut être mélangé avec un flux d'hydrogène, puis on introduit cet effluent, éventuellement mélangé avec un flux d'hydrogène dans l'étape d'hydrocraquage et d'hydroisomérisation HCK-HIS.

Selon l'invention, la fraction lourde produite à l'étape de synthèse Fischer-Tropsch FT est donc mis en contact avec un catalyseur d'hydrotraitement réduit ayant une température proche de 150°C, mais sans présence de la fraction légère issue de l'étape FT. Cependant, compte tenu de la composition de cette fraction lourde, c'est-à-dire que la teneur en composés oxygénés de la fraction lourde étant inférieure à celle de la fraction légère issue de l'unité de synthèse Fischer-Tropsch FT, le risque de formation de métaux carbonyles lors de l'étape d'hydrotraitement HDT est donc selon l'invention fortement réduit pendant l'étape de démarrage DM. De plus compte tenu du fait que la teneur en oléfine de la fraction lourde est faible (la majeure partie des oléfines étant présente dans la fraction légère), le démarrage de l'étape d'hydrotraitement HDT et éventuellement de l'étape d'hydrocraquage et d'hydroisomérisation HCK-HIS ne risque pas de surchauffe thermique du fait de l'hydrogénation des oléfines.

**Etape de mise en température TEMP**

Durant l'étape TEMP on continue de mettre en contact la fraction hydrocarbonée lourde avec le catalyseur d'hydrotraitement. De manière identique à l'étape DM, la fraction hydrocarbonée légère n'est pas mise en contact avec le catalyseur d'hydrotraitement.

A l'étape TEMP, on augmente la température de mise en contact du catalyseur avec la fraction lourde dans l'étape d'hydrotraitement HDT, par exemple jusqu'à une température comprise entre 260°C et 360°C, de préférence entre 280°C et 350°C, par exemple à une température d'environ 300°C.

Au début de l'étape de mise en température TEMP, la température de la fraction lourde avant d'être introduite dans l'étape d'hydrotraitement HDT peut être comprise entre 100°C et 250°C, et de préférence entre 120°C et 200°C.

La montée en température peut être faite progressivement, par exemple sur une durée comprise entre 1 heure et 20 heures, de préférence entre 1 heure et 10 heures. La montée en température est effectuée en chauffant préalablement la fraction lourde avant envoi dans l'étape d'hydrotraitement HDT. Par exemple la fraction lourde arrivant par le conduit 1 est chauffée, par exemple dans un four, à une température comprise entre 260°C et 360°C, de préférence entre 280°C et 350°C.

La température de mise en contact du catalyseur dans l'étape d'hydrocraquage et d'hydroisomérisation HCK-HIS, si elle est mise en œuvre, est également augmentée jusqu'à une température comprise entre 260°C et 360°C, de préférence entre 280°C et 350°C, par exemple à une température d'environ 300°C. La montée en température du catalyseur dans l'étape d'hydrocraquage et d'hydroisomérisation HCK-HIS est également faite progressivement, et en conséquence de la montée en température du catalyseur de l'étape d'hydrotraitement HDT.

**Etape de transition TR**

Après avoir effectué l'étape de mise en température TEMP, c'est-à-dire lorsque le catalyseur dans l'étape d'hydrotraitement HDT est montée à une température comprise entre 260°C et 360°C, de préférence entre 280°C et 350°C, par exemple à une température d'environ 300°C, on mélange la fraction légère produite à l'étape de synthèse Fischer-Tropsch FT avec la fraction hydrocarbonée lourde, avant d'injecter le mélange à l'étape d'hydrotraitement HDT. L'effluent issu de l'étape d'hydrotraitement HDT peut ensuite être introduit à l'étape d'hydrocraquage et d'hydroisomérisation HCK-ISO.

Le débit de fraction légère mélangée avec la fraction lourde peut être augmenté progressivement par exemple de 0% volumique jusqu'à 100% volumique de la fraction légère produite dans l'unité de synthèse Fischer-Tropsch. Par exemple l'augmentation du débit de 0% à 100% vol peut être réalisée sur une durée comprise entre 1h et 20h, de préférence 1h et 10h.

Puis les conditions opératoires de l'étape d'hydrotraitement HDT et éventuellement de l'unité d'hydrocraquage et d'hydroisomérisation HCK-HIS sont modifiées jusqu'à atteindre les conditions opératoires de la phase de production décrite ci-dessus, afin d'obtenir les conversions en composés oxygénés et oléfines désirées. Ensuite le procédé de production de gazole et de kérosène est opéré comme décrit en référence à la figure 1.

## EXEMPLES

### Exemple selon l'invention

L'exemple est décrit en référence à la figure 1 et à la figure 2.

Le procédé produit à l'étape FT une faction lourde circulant dans le conduit 3 correspondant aux cires Fischer Tropsch et une fraction légère circulant dans le conduit 2 correspondant aux condensats Fischer-Tropsch. La charge présente les caractéristiques suivantes.

Tableau 1: caractéristiques de la charge

|  |  | Condensats | Cires |
|---|---|---|---|
| Masse volumique à 15°C | g/cm3 | 0,7513 | 0,7613 |
| 5.0% | °C | 68,9 | 287,1 |
| 20.0% | °C | 128,4 | 359,2 |
| 50.0% | °C | 217,8 | 431,4 |
| 70.0% | °C | 272,8 | 475,2 |
| 95.0% | °C | 368,3 | 577,7 |
| Composé en 370°C$^+$ | %pds | 4 | 78 |
| Paraffines | %pds | 73 | 95 |
| Oléfines | %pds | 20 | 4 |
| Oxygénés | %pds | 7 | 1 |

A l'étape HDT, on met en œuvre un catalyseur d'hydrotraitement de type NiMo supporté sur alumine combinée au NiO. Ce catalyseur est commercialisé par Axens sous la référence HR945.

Après avoir effectué l'étape de réduction RE, on effectue l'étape de démarrage DM. La fraction lourde arrivant par le conduit 3 est mise en contact avec le catalyseur d'hydrotraitement en présence d'hydrogène.

Plus précisément les cires issues de l'étape de synthèse Fischer-Tropsch FT sont envoyées en mélange avec un flux d'hydrogène. Le mélange est envoyé à 150 °C. Le débit d'hydrogène est ajusté de façon à maintenir un ratio H2/HC=600L/L mesuré en sortie de l'unité. Durant cette étape, l'appoint d'hydrogène est limité compte tenu de la très faible conversion des oléfines et des oxygènes, présents en très faible quantité. Ensuite on opère l'étape de mise en température TEMP. La température de mise en contact du catalyseur d'hydrotraitement est augmentée progressivement jusqu'à la température requise pour l'hydrotraitement, 335 °C.

Une fois la température cible atteinte, on effectue l'étape de transition TR. La fraction hydrocarbonée légère, c'est à dires les condensats, issue de la synthèse Fischer-Tropsch FT par le conduit 2 est ajoutée en mélange avec la fraction hydrocarbonée lourde, c'est-à-dire la cire, arrivant par le conduit 3. Les condensats sont injectés progressivement de façon à contrôler l'augmentation de la température liée à l'exothermie de la réaction d'hydrogénation des oléfines.

Les conditions opératoires de l'étape HDT sont ensuite portées pour obtenir 100% d'hydrogénation des oléfines dans la section d'hydrotraitement. Les conditions sont :

P=6,5 MPa (65 bars),
T=335°C
vvh=1h-1

H2/HC=600NI/I/h-1 mesuré en sortie de l'unité avec un appoint d'H2 frais de l'ordre de 10% à 20% volume du débit d'H2 total (H2 recyclé et frais)

Les caractéristiques de l'effluent en sortie de l'étape d'hydrotraitement HDT sont listées dans le tableau 2.

Tableau 2: caractéristiques de l'effluent hydrotraité

| densité à 15°C | 0.7853 | g/cc |
|---|---|---|
| Soufre | < limite détection | ppm poids |
| Azote | < limite détection | ppm poids |
| oxygène | 0 | %poids |
| n-paraffines | 85.0 | %poids |
| i-paraffines | 5.68 | %poids |
| naphtènes | 0 | %poids |
| aromatiques | 0 | %poids |
| oléfines | 0 | %poids |
| distillation simulée | | |
| 5 | 126.4 | °C |
| 20 | 197.8 | °C |
| 50 | 319.7 | °C |
| 70 | 402.5 | °C |
| 95 | 525.3 | °C |
| composés 370°C+ | 37 | %poids |

Les caractéristiques de l'effluent hydrotraité figurant dans le tableau 2 montre que le catalyseur d'hydrotraitement n'a aucune activité craquante. Les oléfines et les oxygénés mesurés par chromatographie sont entièrement décomposés.

Dans ce qui suit, la conversion de la fraction 370°C+ est définie par la formule suivante :

$$Conversion = [(\% \ 370°C\text{-}effluent) - (\% \ 370°C\text{-}charge)]/(100 - \% \ 370°C\text{-}charge)$$

Avec:

% de 370°C- effluents, la fraction massique en composés ayant des points d'ébullition inférieurs à 370°C dans les effluents
% de 370°C- charge = fraction massique en composés ayant des points d'ébullition inférieurs à 370°C dans la charge d'hydrocraquage.

Lors de l'étape d'hydrocraquage et d'hydrotraitement HCK-HIS, la conversion cible de la fraction 370°C+ est de 55% poids. Les conditions opératoires adéquates sont :

P=6,5 MPa (65 bars),
T catalyseur HCK=363°C
vvh=2h-1
H2/HC=600L/L
Age du catalyseur: 75 jours

Le catalyseur d'hydrocraquage et d'hydroisomérisation est mis en œuvre en lit fixe. On met en œuvre un catalyseur commercialisé par AXENS à base de Pt supporté sur silice-alumine.
Il est activé par réduction sous hydrogène dans les conditions opératoires suivantes:

- débit d'hydrogène pur : 1000 normaux litres par heure et par litre de catalyseur,
- montée de la température ambiante à 150°C : 25°C/min,
- palier d'une heure à 150°C,
- montée de 150°C à 450°C à 25°C/min,
- palier de deux heures à 450°C,

Ensuite l'effluent liquide issu de l'étape d'hydrocraquage et d'hydroisomérisation HCK-HIS est fractionné. On sépare ainsi la coupe essence, la coupe kérosène, la coupe gazole. La fraction 370°C+ sortant du fractionnement est recyclée vers l'étape HCK-HIS.

Ainsi selon le mode d'injection ainsi que la température d'injection de la charge selon l'invention dans l'unité d'hydrotraitement et l'unité d'hydrocraquage et d'hydroisomérisation sont deux moyens permettant de réduire l'empoisonnement des catalyseurs d'hydrotraitement et d'hydrocraquage et hydroisomérisation et de conserver ainsi les performances catalytiques.

## Revendications

1. Procédé de démarrage d'un procédé de production de kérosène et de gazole à partir de composés hydrocarbonés produits par synthèse Fischer-Tropsch, dans lequel on effectue les étapes suivantes :

   a) on effectue une réaction catalytique de synthèse Fischer-Tropsch avec un gaz de synthèse pour produire une fraction hydrocarbonée lourde et une fraction hydrocarbonée légère,
   b) on effectue une réduction (RE) d'un catalyseur d'hydrotraitement comportant du molybdène et du nickel et un support comportant de l'alumine par mise en contact avec un gaz comportant de l'hydrogène, puis on effectue l'étape c),
   c) on met en contact (DM) la fraction hydrocarbonée lourde avec le catalyseur d'hydrotraitement,
   d) pendant l'étape c), on augmente la température (TEMP) du catalyseur d'hydrotraitement jusqu'à une température comprise entre 260°C et 360°C, puis on effectue l'étape e),
   e) on met en contact (TR) un mélange comportant la fraction hydrocarbonée lourde et la fraction hydrocarbonée légère avec le catalyseur d'hydrotraitement,
   f) après l'étape e), on continue de mettre en contact le mélange comportant la fraction hydrocarbonée lourde et la fraction hydrocarbonée légère avec le catalyseur d'hydrotraitement dans les conditions opératoires suivantes :

      - une température comprise entre 100 et 450°C,
      - une pression totale comprise entre 0,5 de 15 MPa,
      - un débit d'hydrogène tel que le rapport volumique d'hydrogène par rapport à la charge d'hydrocarbures soit compris entre 100 à 3000 NI/l/h,
      - une vitesse volumique horaire comprise entre 0,1 et 10h$^{-1}$,

   puis l'effluent de l'étape f) est mis en contact en présence d'hydrogène et d'un catalyseur d'hydrocraquage et d'hydroisomérisation comportant du platine et un support choisi parmi une silice-alumine et une zéolithe dans les conditions opératoires suivantes :

      - une température comprise entre 200 et 450°C,
      - une pression totale comprise entre 0,2 et 15 MPa,
      - un débit d'hydrogène tel que le rapport volumique d'hydrogène par rapport à la charge d'hydrocarbures soit compris entre 100 à 2000 NI/l/h,
      - une vitesse volumique horaire est comprise entre 0,1 et 10h$^{-1}$.

2. Procédé selon la revendication 1, dans lequel, on effectue l'étape b) à une température comprise entre 300°C et 500°C, puis on refroidit le catalyseur d'hydrotraitement à une température comprise entre 120°C et 170°C, puis on effectue l'étape c).

3. Procédé selon l'une des revendications 1 et 2, dans lequel au début de l'étape d) la fraction hydrocarbonée lourde est à une température comprise entre 100°C et 250°C et dans lequel à l'étape d), on chauffe progressivement pendant une durée comprise entre 1 et 20 heures, la fraction hydrocarbonée lourde jusqu'à une température comprise entre 260°C et 360°C.

**4.** Procédé selon l'une des revendications 1 à 3, à l'étape e), on mélange progressivement la fraction légère avec la fraction lourde, la part de fraction légère introduite dans le mélange étant augmentée de 0% à 100% volumique de la fraction légère issue de l'étape a), sur une durée comprise entre 1 et 20 heures.

**5.** Procédé selon l'une des revendications 1 à 4, dans lequel pendant l'étape c), la fraction hydrocarbonée légère est évacuée du procédé de démarrage.

**6.** Procédé selon l'une des revendications 1 à 5, dans lequel l'étape a) est opérée, en présence d'un catalyseur comprenant un support et un métal choisi parmi le cobalt et le fer, à une pression totale comprise entre 0,1 et 15 MPa, à une température comprise entre 150 et 350°C, et à une vitesse volumique horaire comprise entre 100 et 20000 volumes de gaz de synthèse par volume de catalyseur et par heure.

**Patentansprüche**

**1.** Verfahren zum Anfahren eines Verfahrens zur Herstellung von Kerosin und Diesel aus durch Fischer-Tropsch-Synthese hergestellten Kohlenwasserstoffverbindungen, bei dem man die folgenden Schritte durchführt:

a) man führt eine katalytische Fischer-Tropsch-Synthese-Reaktion mit einem Synthesegas zur Herstellung einer schweren Kohlenwasserstofffraktion und einer leichten Kohlenwasserstofffraktion durch,
b) man führt eine Reduktion (RE) eines Hydrotreating-Katalysators, der Molybdän und Nickel und einen Aluminiumoxid umfassenden Träger umfasst, durch Inkontaktbringen mit einem Wasserstoff umfassenden Gas durch und führt dann Schritt c) durch,
c) man bringt die schwere Kohlenwasserstofffraktion mit dem Hydrotreating-Katalysator in Kontakt (DM),
d) man erhöht während Schritt c) die Temperatur (TEMP) des Hydrotreating-Katalysators auf eine Temperatur zwischen 260 °C und 360 °C und führt dann Schritt e) durch,
e) man bringt eine Mischung, die die schwere Kohlenwasserstofffraktion und die leichte Kohlenwasserstofffraktion umfasst, mit dem Hydrotreating-Katalysator in Kontakt (TR),
f) nach Schritt e) setzt man das Inkontaktbringen der Mischung, die die schwere Kohlenwasserstofffraktion und die leichte Kohlenwasserstofffraktion umfasst, mit dem Hydrotreating-Katalysator unter den folgenden Betriebsbedingungen fort:

- einer Temperatur zwischen 100 und 450 °C,
- einem Gesamtdruck zwischen 0,5 und 15 MPa,
- einer solchen Wasserstoff-Durchflussrate, dass das Volumenverhältnis von Wasserstoff zu dem Kohlenwasserstoff-Einsatzstoff zwischen 100 und 3000 Nl/l/h liegt,
- einer Katalysatorbelastung zwischen 0,1 und 10 h$^{-1}$,

wonach der Austragsstrom von Schritt f) in Gegenwart von Wasserstoff und einem Hydrocracking- und Hydroisomerisierungskatalysator, der Platin und einen aus einem Siliciumdioxid-Aluminiumoxid und einem Zeolith ausgewählten Träger umfasst, unter den folgenden Betriebsbedingungen in Kontakt gebracht wird:

- einer Temperatur zwischen 200 und 450 °C,
- einem Gesamtdruck zwischen 0,2 und 15 MPa,
- einer solchen Wasserstoff-Durchflussrate, dass das Volumenverhältnis von Wasserstoff zu dem Kohlenwasserstoff-Einsatzstoff zwischen 100 und 2000 Nl/l/h liegt,
- einer Katalysatorbelastung zwischen 0,1 und 10 h$^{-1}$.

**2.** Verfahren nach Anspruch 1, bei dem man Schritt b) bei einer Temperatur zwischen 300 °C und 500 °C durchführt, dann den Hydrotreating-Katalysator auf eine Temperatur zwischen 120 °C und 170 °C abkühlt und dann Schritt c) durchführt.

**3.** Verfahren nach einem der Ansprüche 1 und 2, bei dem zu Beginn von Schritt d) die schwere Kohlenwasserstofffraktion einer Temperatur zwischen 100 °C und 250 °C vorliegt und bei dem man in Schritt d) die schwere Kohlenwasserstofffraktion allmählich über einen Zeitraum zwischen 1 und 20 Stunden auf eine Temperatur zwischen 260 °C und 360 °C erhitzt.

**4.** Verfahren nach einem der Ansprüche 1 bis 3, bei dem man in Schritt e) die leichte Fraktion allmählich mit der schweren Fraktion mischt, wobei der in die Mischung eingetragene Anteil an leichter Fraktion über einen Zeitraum zwischen 1 und 20 Stunden von 0 auf 100 Vol.-% des leichten Anteils aus Schritt a) erhöht wird.

5. Verfahren nach einem der Ansprüche 1 bis 4, bei dem während Schritt c) die leichte Kohlenwasserstofffraktion aus dem Anfahrverfahren abgezogen wird.

6. Verfahren nach einem der Ansprüche 1 bis 5, bei dem Schritt a) in Gegenwart eines einen Träger und ein aus Cobalt und Eisen ausgewähltes Metall enthaltenden Katalysators bei einem Gesamtdruck zwischen 0,1 und 15 MPa, bei einer Temperatur zwischen 150 und 350 °C und bei einer Katalysatorbelastung zwischen 100 und 20.000 Synthesegasvolumina pro Katalysatorvolumen und pro Stunde durchgeführt wird.

**Claims**

1. Process for the initiation of a process for the production of kerosene and diesel fuel from hydrocarbon compounds produced by the Fischer-Tropsch synthesis, in which the following stages are carried out:

> a) a catalytic Fischer-Tropsch synthesis reaction is carried out with a synthesis gas in order to produce a heavy hydrocarbon fraction and a light hydrocarbon fraction,
> b) a reduction (RE) of a hydrotreating catalyst comprising molybdenum and nickel and a support comprising alumina is carried out by bringing into contact with a hydrogen-comprising gas, then stage c) is carried out,
> c) the heavy hydrocarbon fraction is brought into contact (DM) with the hydrotreating catalyst,
> d) during stage c), the temperature (TEMP) of the hydrotreating catalyst is increased up to a temperature of between 260°C and 360°C, then stage e) is carried out,
> e) a mixture comprising the heavy hydrocarbon fraction and the light hydrocarbon fraction is brought into contact (TR) with the hydrotreating catalyst,
> f) after stage e), the mixture comprising the heavy hydrocarbon fraction and the light hydrocarbon fraction continues to be brought into contact with the hydrotreating catalyst under the following operating conditions:

>> - a temperature of between 100 and 450°C,
>> - a total pressure of between 0.5 and 15 MPa,
>> - a hydrogen flow rate such that the ratio by volume of hydrogen with respect to the hydrocarbon feedstock is between 100 and 3000 Sl/l/h,
>> - an hourly space velocity of between 0.1 and 10 $h^{-1}$,

> then the effluent from stage f) is brought into contact in the presence of hydrogen and of a hydrocracking and hydroisomerization catalyst comprising platinum and a support chosen from a silica/alumina and a zeolite under the following operating conditions:

>> - a temperature of between 200 and 450°C,
>> - a total pressure of between 0.2 and 15 MPa,
>> - a hydrogen flow rate such that the ratio by volume of hydrogen with respect to the hydrocarbon feedstock is between 100 and 2000 Sl/l/h,
>> - an hourly space velocity of between 0.1 and 10 $h^{-1}$.

2. Process according to Claim 1, in which stage b) is carried out at a temperature of between 300°C and 500°C, then the hydrotreating catalyst is cooled to a temperature of between 120°C and 170°C, and then stage c) is carried out.

3. Process according to either of Claims 1 and 2, in which, at the start of stage d), the heavy hydrocarbon fraction is at a temperature between 100°C and 250°C and in which, in stage d), the heavy hydrocarbon fraction is gradually heated up to a temperature of between 260°C and 360°C over a period of time of between 1 and 20 hours.

4. Process according to one of Claims 1 to 3, in which, in stage e), the light fraction is gradually mixed with the heavy fraction, the portion of light fraction introduced into the mixture being increased from 0% to 100% by volume of the light fraction resulting from stage a), over a period of time of between 1 and 20 hours.

5. Process according to one of Claims 1 to 4, in which, during stage c), the light hydrocarbon fraction is discharged from the initiation process.

6. Process according to one of Claims 1 to 5, in which stage e) is carried out, in the presence of a catalyst comprising a support and a metal chosen from cobalt and iron, at a double pressure of between 0.1 and 15 MPa, at a temperature of between 150 and 350°C and at an hourly space velocity of between 100 and 20 000 volumes of synthesis gas per volume of catalyst and per hour.

Figure 1

Figure 2

**EP 3 476 917 B1**

## RÉFÉRENCES CITÉES DANS LA DESCRIPTION

**Documents brevets cités dans la description**

- EP 2351819 A
- US 20040072676 A
- FR 3045654
- EP 297949 A
- US 7404890 B